# EUROPÄISCHE PATENTANMELDUNG

(11) **EP 2 493 041 A2**
(43) Veröffentlichungstag der Anmeldung: **29.08.2012**
(21) Anmeldenummer: 12153464.8
(22) Anmeldetag: 01.02.2012
(51) Int. Cl.: H02G 3/08, H02G 3/22

(54) **Leitungselementdurchführung**

(30) Priorität: 23.02.2011 DE 102011004575
(71) Anmelder: HILTI Aktiengesellschaft, 9494 Schaan (LI)
(72) Erfinder: Münzenberger, Herbert, 65191 Wiesbaden (DE)

(57) **Zusammenfassung**

Um eine feuer- und rauchgasdichte Leitungselementdurchführung zum einfachen Einbau in ein oder mehrfach beplankte Trockenbauwände zu schaffen, wobei die Leitungselementdurchführung in eine passende Bauteilöffnung einsetzbar und auch ohne Belegung feuer- und rauchgasdicht ist, wird eine Leitungselementdurchführung mit einem als Hülse, insbesondere kegelstumpfförmig oder zylindrisch ausgebildeten, wenigstens einseitig geschlossenen Formkörper aus einem nachgiebig verformbaren Intumeszenzmaterial vorgeschlagen, mit der Maßgabe, dass der Öffnungsquerschnitt der Hülse höchstens 60% des Querschnitts des Bauteildurchbruches entspricht.

## Beschreibung

### Technisches Gebiet

Die Erfindung betrifft eine feuer- und rauchgasdichte Leitungselementdurchführung für Durchbrüche in Wänden und Decken, insbesondere betrifft die Erfindung eine Leitungsdurchführung aus einem intumeszenzfähigen Schaum.

### Stand der Technik

Aus Brandschutzzwecken müssen Durchführungen von Leitungselementen, wie beispielsweise Rohre oder Kabel oder dergleichen, durch Wände oder Decken mit einer sog. Abschottung oder einem Schott versehen werden, um zu verhindern, dass sich im Brandfall Flammen und insbesondere Rauch und giftige Gase von Raum zu Raum oder über Geschosse ausbreiten können.

Bei der Abschottung von Räumen sind die für Kabel, Rohre und ähnliches erforderlichen Durchbrüche bzw. Durchführungsöffnungen problematisch, da sie erst nach dem Fertigstellen der gesamten Installation, also nachträglich, installiert wurden und dementsprechend auch erst nachträglich, also nach dem Verlegen der Kabel und Rohre verschlossen werden können.

Vielfach blieben die Wanddurchbrüche entweder offen oder sie wurden nur vorläufig durch zugeschnittene Mineralwollplatten oder Steinwolle verschlossen. Zum Hindurchführen der Kabel und Leitungen müssen diese Verschlüsse wieder entfernt werden, wobei dann nach dem Hindurchführen der Leitungen und Kabel die Wanddurchbrüche durch Brandschutzmörtel, Steinwolle oder Mineralwolleinlagen endgültig verschlossen werden.

Oft ist es jedoch auch erforderlich, dass lange nach Fertigstellen der Installation Leitungen gelegt werden müssen. Dies ist vor allem dann der Fall, wenn neue Räumlichkeiten in älteren Gebäuden geschaffen werden. Hierzu werden oft Trockenbauwände verwendet. Aber auch beim Innenausbau bzw. der Renovierung von öffentlichen Gebäuden, Schulen, Krankenhäusern, Bürohäusern und Sonderbauten werden immer häufiger Trockenbauwände erstellt. Auch die Brandwände sind häufiger solche Trockenbauwände. Die Trockenbauwände bestehen aus Gipskartonplatten und sind hohl oder mit Mineralwolle gefüllt. Es bietet sich daher an, Installationen, insbesondere die Unterverteilung von Kabeln, in diesen Wänden zu führen.

Neben den klassischen Kabeldurchführungen finden sich daher immer häufiger Ausfädelungen von Kabeln aus diesen Wänden. Bei kleineren Einzelkabeln muss dafür keine aufwendige Brandschutzmassnahme getroffen werden. Eine Abdichtung mit Gips oder Dichtmasse ist ausreichend. Dickere Kabel, kleine Kabelbündel, Leerrohre oder mehrere Einzelkabel müssten, je nach Konfiguration, mit einem zugelassenen Brandschutzsystem abgeschottet werden. Die Regeln, wie dies auszuführen ist, sind unterschiedlich, so dass der Handwerker bei der Installation unsicher ist, wie die Leitungsdurchführung abzuschotten ist. Darüber hinaus war es bisher erforderlich, die Leitungsdurchführungen unmittelbar nach der Installation der Kabel feuer- und rauchgasdicht zu verschliessen. Bei der Schaffung von Durchbrüchen in Brandschutzbauteilen mit einer erst sehr viel späteren Belegung mit Leitungen ergab sich das Problem, dass bis zu der Belegung die Öffnungen feuer- und rauchgasdicht abgeschlossen werden mussten. Die Belegung erforderte mehrere Arbeitsschritte, die Leitungen durchzuführen und die entstehenden Freiräume wieder feuer- und rauchgasdicht zu verschließen. Dies war bisher nicht mit einfachen Mitteln möglich.

Die bisher gebräuchlichen Kabelboxen sind aufwendig, insbesondere bei der nachträglichen Belegung mit Kabeln und/oder Rohren. Die Schwierigkeit besteht darin, die (nachträglich) geschaffenen Öffnungen rauchgasdicht zu verschließen.

Aus der EP 0321664 ist ein rauchgas- und feuerdichter Verschluss für Durchbrüche in Wänden, Decken oder dergleichen bekannt, der aus einem als konischer Stopfen ausgebildeter Formkörper aus einem nachgiebig verformbaren Intumeszenzmaterial besteht. Der Stopfen ist formstabil verformbar, so dass er in die Durchführung gepresst werden kann und diese dicht verschließen kann. In dem Stopfen können Durchgangs-Bohrungen zur dichten Aufnahme von Rohren bzw. Leitungen ausgebildet sein. Die Durchgangs-Bohrungen müssen aber an den jeweiligen Rohr- bzw. Leitungsdurchmesser angepasst werden, um dicht abschließen zu können. Damit ist zur nachträglichen Belegung des Stopfens mit Kabeln oder Leitungen ein zusätzlicher Arbeitsaufwand erforderlich, was das System unflexibel und fehleranfällig macht. Bei einer Belegung mit mehreren Kabeln oder Leitungen ergibt sich zudem das Problem, dass das Material des Stopfens aufgrund seiner Dicke die entstehenden Zwickel und Spalten nicht abdichtet, so dass diese zusätzlich mit speziellen Dichtmassen verschlossen werden müssen.

Aus der EP 2 273 637 A2 ist eine Anordnung zur rauchgasdichten Durchführung eines Langformteils durch eine Wand bekannt. Das Brandschutzelement besteht aus einer Hülse aus intumsezierendem Material oder aus einer Kunststoffhülse mit einer inneren und/oder äußeren Beschichtung aus intumeszierendem Material. Allerdings ist die Anordnung selbst nicht rauchgasdicht, so dass diese bei Nichtbelegung der Bauteildurchführung nicht verwendet werden kann. Ferner hat die Anordnung den Nachteil, dass die Belegung mit mehreren Langformteilen (Leitungselementen) aufgrund der wenig flexiblen Hülse nahezu unmöglich.

Generell bereitet die Einhaltung der 60%-Regel bei Kabelabschottungen mit behördlicher Zulassung große Probleme, wonach Öffnungen in Brandwänden und -decken nur bis max. 60% des Öffnungsquerschnitts mit Kabeln gefüllt werden dürfen. In der Praxis ist schwer zu beurteilen, wann diese Grenze erreicht oder überschritten ist.

### Darstellung der Erfindung

Der Erfindung liegt daher die Aufgabe zugrunde, eine konstruktiv einfache, einfach handhabbare und kostengünstige Leitungselementdurchführung für Durchbrüche in Bauelementteilen, wie Brandschutzdecken und -wänden, bereitzustellen, die auf einfache Weise nach der Erstellung der Bauteile eingebaut werden kann und eine feuer- und rauchgasdichte Abschottung der Durchbrüche, auch bei Nichtbelegung erlaubt.

Erfindungsgemäß wird diese Aufgabe dadurch gelöst, dass die Leitungselementdurchführung durch einen als Hülse ausgebildeten, wenigstens einseitig geschlossenen Formkörper aus einem nachgiebig verformbaren Intumeszenzmaterial gekennzeichnet ist.

Vorteilhafte Weiterbildungen der Erfindung sind den Unteransprüchen zu entnehmen.

Es zeigen:
- FIG. 1:: eine Leitungselementdurchführung gemäss einer ersten erfindungsgemässen Ausführungsform;
- FIG. 2:: einen Querschnitt durch die in FIG. 1 gezeigte Leitungselementdurchführung;
- FIG. 3:: einen Querschnitt durch eine in eine Bauteilöffnung eingesteckte Leitungselementdurchführung nach FIG. 1 mit Kabelbelegung.
- FIG. 4:: eine Leitungselementdurchführung gemäss einer zweiten erfindungsgemäßen Ausführungsform;
- FIG. 5:: einen Querschnitt durch eine in eine Bauteilöffnung eingesteckte Leitungselementdurchführung nach FIG. 4 mit Kabelbelegung.

Im Sinne der vorliegenden Erfindung beuten:
- *"nachgiebig verformbar",* dass das Material, aus dem die Leitungselementdurchführung besteht, so elastisch ist, dass ein Zusammendrücken problemlos, d.h. ohne großen Kraftaufwand, etwa mit einer Hand, möglich ist und die Leitungselementdurchführung wieder ihre ursprüngliche Form annimmt;
- *"formschlüssig",* dass die Leitungselementdurchführung nicht nur punktuell sondern über einen gewissen Bereich an der Innenwandung der Bauteildurchführung direkt an dieser anliegt und eine Kontaktfläche bildet;
- *"Intumeszenzmaterial",* ein intumeszenzfähiger Schaumstoff, der bei Temperaturen ab ca. 150°C und/oder Flammeinwirkung unter mehrfacher Volumenvergrößerung karbonisiert; ein erfindungsgemäß verwendbares Intumeszenzmaterial ist exemplarisch in der DE 3917518 oder US 3574664 beschrieben;
- *"aschebildend",* dass der Schaumstoff ohne wesentliche Intumeszenz karbonisiert;
- *"Leitungselement"* Kabel, wie Elektrokabel, Leitungen, Leerrohre, Rohre, Leitungs- oder Rohrbündel und dergleichen;
- *"Verschluss",* dass bei einem einstückigen Hohlformkörper die Grund- und/oder die Deckfläche geschlossen ist;
- *"Öffnungsquerschnitt",* der Querschnitt der Leitungselementdurchführung, der mit Kabeln belegt werden kann.

Die erfindungsgemässe Leitungselementdurchführung ist zweckmässigerweise so geformt, dass sie in einen kreisrunden oder auch ovalen Wanddurchbruch von Hand eingeschoben werden kann. Aufgrund eines geringen Übermasses der als Hülse ausgebildeten Form und des nachgiebig verformbaren Materials legt sich die Leitungselementdurchführung nach dem Einschieben mit einem vorgegebenen Druck an die Innenwandung des Durchbruchs an und dichtet diesen ab. Genauer wird dies erreicht, wenn der Außendurchmesser der Leitungselementdurchführung etwas größer als der Durchmesser der Bauteilöffnung ist. Bevorzugt ist der Außendurchmesser 1 bis 5 mm größer als der Durchmesser der Bauteilöffnung, stärker bevorzugt 2 bis 3 mm.

Das nachgiebig verformbare Material aus dem diese besteht, ermöglicht auch die feuer- und rauchgasdichte Abdichtung nach dem Einführen wenigstens einer Leitung. Die durchgeführten Kabel komprimieren die durchstoßene Wandung der Leitungselementdurchführung und generieren damit eine weitgehende Rauchgasdichtigkeit.

Die allgemeine bauaufsichtliche Zulassung Nr. Z-19.15-349 schreibt vor, dass der gesamte zulässige Querschnitt der Installation, bezogen auf die jeweiligen Außenabmessungen, insgesamt nicht mehr als 60% der Rohbauöffnung betragen darf, die sogenannte 60%-Regel. Dementsprechend ist die Leitungselementdurchführung erfindungsgemäß derart ausgebildet, dass die freie Öffnung des Kegelstumpfes dem freien belegbaren Öffnungsquerschnitt und somit 60% des Querschnitts der Bauteilöffnung entspricht. Somit darf die Öffnung des Kegelstumpfes komplett mit Leitungselementen gefüllt werden, ohne dass die 60%-Regel verletzt wird. Durchgeführt werden dürfen Kabel und Leerrohre einzeln oder als Bündel bis zu diesem max. Innendurchmesser.

Erfindungsgemäß besteht der Formkörper aus einem aschebildenden und/oder intumeszenzfähigen Schaumstoff. Damit wird ermöglicht, die Bauteildurchbrüche prophylaktisch zu erstellen und trotz fehlender Belegung diese bei Temperaturen ab ca. 150 °C und/oder bei Flammeneinwirkung gegen Luft- bzw. Rauchdurchtritt zu verschliessen und erst bei Bedarf die Leitungselemente durchzuführen.

Bevorzugt ist die Leitungselementdurchführung einstückig ausgebildet.

In einer bevorzugten Ausführungsform ist die Leitungselementdurchführung an der Grundfläche mit einer flanschartigen, radial nach außen weisenden Umrandung versehen. Diese verhindert zum einen ein zu weites Einschieben der Leitungselementdurchführung in den Durchbruch, so dass verhindert wird, dass die Leitungselementdurchführung in beispielsweise den Hohlraum von Trockenbauwänden fällt. Zum anderen dichtet die Umrandung sowohl bei fehlender Belegung als auch bei Belegung durch ein Leitungselement im Brandfall die Bauteilöffnung zusätzlich ab.

Gemäß einer bevorzugten Ausführungsform der Erfindung ist der Formkörper der Leitungselementdurchführung an seiner Deckfläche geschlossen, um einen Verschluss zu bilden. Im Allgemeinen ist es unerheblich, ob die Grund- oder die Deckfläche des Formkörpers geschlossen ist oder beide. Beides ermöglicht eine feuer- und rauchgasdichte Abschottung der Bauteildurchführung. Ein einseitig geschlossener Formkörper ist jedoch einfacher und billiger in der Herstellung, ohne seine Funktionalität einzubüßen, so dass diese Ausführungsform stärker bevorzugt ist, wobei besonders bevorzugt der Formkörper an seiner Deckfläche geschlossen ist.

Die Wanddicke des Formkörpers sollte in Abhängigkeit von der Größe der zu verschließenden Bauteildurchführung und dementsprechend der zu verwendenden Größe der Leitungselementdurchführung derart gewählt sein, dass zum einen die Flexibilität der Leitungselementdurchführung nicht beeinträchtigt wird und zum anderen eine formschlüssige Abdichtung der Bauteildurchführung gewährleistet ist. Die Wand des Formkörpers muss jedoch mindestens so dick sein, dass der Querschnitt der freien belegbaren Öffnung nicht größer als 60% des Querschnitts der Bauteilöffnung beträgt. Ist die Wanddicke zu groß, so schmiegt sich die Leitungselementdurchführung nicht formschlüssig an die Bauteildurchführung und die Bauteilaußenwand an, wodurch die Rauchgasdichtigkeit nicht mehr gewährleitstet ist.

Bevorzugt beträgt die Wanddicke d₁ 5 bis 20 mm, stärker bevorzugt 8 bis 16 mm, mindestens aber so dick, dass die 60% Regel nicht verletzt wird. Bei einer Bohrung von 4 cm ∅ ist die Fläche 12,6 cm² nach der 60%-Regel dürfen 7,5 cm² belegt werden, das entspricht einem ∅ von 3,1 cm. Die Wandstärke muss also mindestens 5 mm betragen. Bei einer Bohrung von 6 cm ∅ wäre die Wandstärke dementsprechend 7 mm und bei 10 cm ∅ 11 mm.

Bei einer Wandstärke von weniger als 5 mm reicht das Material der Leitungselementdurchführung nicht aus, eine für die Abdichtung der Bauteildurchführung im Brandfall hinreichende Intumeszenz und eine ausreichend stabile Aschekruste zu erzeugen. Des Weiteren wird der Formkörper bei (nachträglicher) Belegung der Leitungselementdurchführung mit Leitungselementen anfällig für Risse, so dass eine Rauchgasdichtigkeit nicht mehr gewährleistet ist.

Die Wanddicke d₂ des Verschlusses ist geringer als die des restlichen Formteils, um das Durchstoßen mit einem Leitungselement zu erleichtern. Sie muss aber so gewählt sein, dass sich der Verschluss nach dem Durchstoßen formschlüssig an das Leitungselement anlegt, damit im Brandfall eine hinreichende Rauchgasdichtigkeit gewährleistet ist. Bevorzugt beträgt die Wanddicke 2 bis 8 mm, stärker bevorzugt 3 bis 6 mm.

In einer weiteren Ausführungsform der Erfindung weist der Verschluss Sollbruchstellen auf, um das Durchstoßen des Verschlusses zu erleichtern. Die Sollbruchstellen zeichnen sich dadurch aus, dass das Material des Formkörpers an diesen Stellen dünner als das der Wand ist, bevorzugt zwischen 1 und 4 mm, stärker bevorzugt zwischen 2 und 3 mm. Ferner weisen diese Stellen eine bestimmte Form auf. Beispielsweise können die Sollbruchstellen kreisförmig, sternförmig oder kreuzförmig ausgebildet, wobei die Geometrie der Sollbruchstelle nicht beschränkt ist. Beispielsweise kann die Sollbruchstelle auch aus mehreren einzelnen Sollbruchstellen bestehen, wie beispielsweise ineinander liegenden Kreisen unterschiedlicher Durchmesser.

In einer bevorzugten Ausführungsform ist der Formkörper als Kegelstumpf ausgebildet. Hierdurch wird eine gewisse Flexibilität bei einer unvollständigen Belegung der Leitungselementdurchführung, wie etwa nur mit einem Leitungselement oder einem Leitungselement mit einem Durchmesser, der geringer ist als der Öffnungsdurchmesser des Leitungselements erreicht, ohne die Rauchgasdichtigkeit negativ zu beeinflussen.

Bevorzugt ist der Verschluss als Membrane ausgebildet.

In einer erfindungsgemäßen Ausführungsform ist der Formkörper als Kegelstumpf ausgebildet. Durch die als Kegelstumpf ausgebildete Form wird erreicht, dass der Anwender bei der Wahl der Leitungselemente einen gewissen Spielraum hat, so dass eine Leitungselementdurchführung wenigstens ein Leitungselement unterschiedlicher Stärke/Durchmesser aufnehmen und abdichten kann.

In einer weiteren, alternativen Ausbildungsform ist der Formkörper als Zylinder ausgebildet. Hierdurch kann eine bessere Rauchgasdichtigkeit erreicht werden, da der längliche Körper Unebenheiten der Wandung des Bauteildurchbruchs besser ausgleichen oder überbrücken kann.

Die Länge I des Formkörpers beträgt, unabhängig davon, ob dieser kegelstumpfförmig oder zylindrisch ausgebildet ist, bevorzugt 3 bis 6 cm, stärker bevorzugt 3,5 bis 5 cm.

Bevorzugt weist der zylindrische Formkörper auf seiner Außenseite mindestens eine radial umlaufende Wulst auf, die von der flanschartigen Umrandung beabstandet angeordnet sind. Bei mehreren Wülsten sind diese zusätzlich untereinander beabstandet angeordnet. Die (erste) Wulst ist dabei in einem Abstand von der flanschartigen Umrandung angeordnet, dass sie bei einer Gipskartonplatte unmittelbar hinter dieser eine Sperre bildet, die ein Herausfallen oder unbeabsichtigtes Herausziehen der Leitungselementdurchführung verhindern oder erschweren soll, wenn das Leitungselement durchgezogen oder an der Leitungselementdurchführung leicht gezogen wird. In Deutschland beträgt die Dicke einer genormten Gipskartonplatte 12,5 mm und in den USA 16 mm, so dass der Abstand der (ersten) Wulst zu der flanschartigen Umrandung 12,5 mm bzw. 16 mm beträgt, ausgehend von der an das Bauteil anliegenden Kante der flanschartigen Umrandung. Sind dickere Wände erforderlich, werden in der Regel zwei (Doppelbeplankung) oder mehrere dieser Gipskartonplatten hintereinander gesetzt. Um ein unbeabsichtigtes Herausziehen etwa aus der doppelt beplankten Wand zu verhindern, ist eine zweite Wulst vorgesehen, die erfindungsgemäss in so einem Abstand zu der ersten Wulst angeordnet ist, dass der Abstand der zweite Wulst zu der flanschartigen Umrandung der Dicke der Beplankung, nämlich 25 mm bzw. 32 mm beträgt, ausgehend von der an das Bauteil anliegenden Kante der flanschartigen Umrandung. Falls keine flanschartige Umrandung vorgesehen ist, wird der Abstand jeweils von der vorderen Kante der Leitungselementdurchführung gemessen.

Die Wulst weist eine Dicke in axialer Richtung von 4 bis 6 mm auf. Die Dicke in radialer Richtung beträgt 2 bis 4 mm.

In einer bevorzugten Ausführungsform des zylindrischen Formkörpers ist der Verschluss in dem Formkörper beabstandet zu dem Ende angebracht, welches der Öffnung entgegengesetzt ist, d.h. welches sich nach Einführen der Leitungselementdurchführung in den Bauteildurchbruch in dem Bauteil befindet. Der über den Verschluss hinausstehende Teil des Formkörpers bildet dann eine Führung, welche die Durchführung von Leitungselementen von der Innenseite der Trockenbauwand her erleichtert.

Die Herstellung des Formkörpers erfolgt durch Formschäumen mit Reaktionsschäumen (RIM) entsprechend DE 3917518, z.B. mit Fomox®-Brandschutzschaum oder der Dämmschicht bildende Baustoff HILTI CP 65GN. Materialien, die für erfindungsgemäße Zwecke eingesetzt werden können, sind aus EP 0061024 A1, EP 0051106 A1, EP 0043952 A1, EP 0158165 A1, EP 0116846A1 und US 3,396,129A sowie EP 1347549 A1 bekannt. Bevorzugt besteht der Formkörper aus einem intumeszenzfähigen Polyurethanschaum, wie er aus der EP0061024 A1, DE 3025309 A1, DE 3041731 A1, DE 3302416 A und DE 3411 327 A1 bekannt ist.

Erfindungsgemäße Ausführungsbeispiele werden nachfolgend anhand der Zeichnungen näher erläutert.

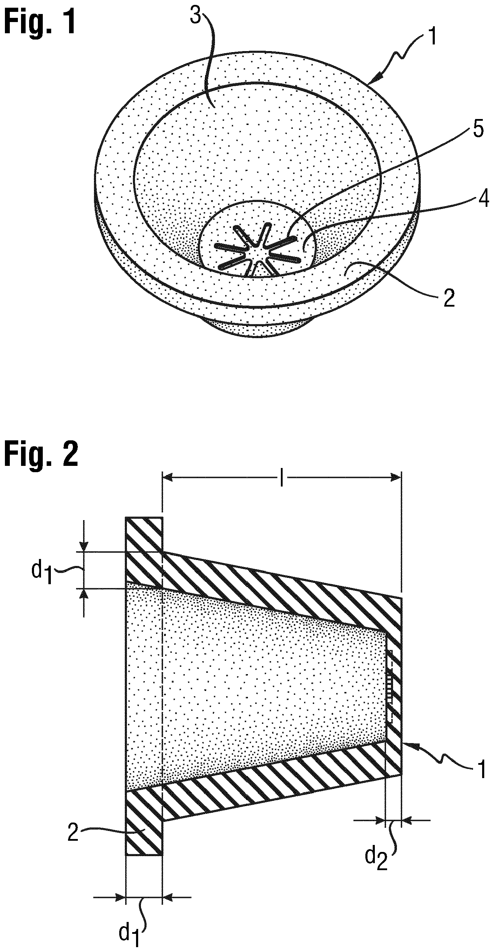

FIG. 1 zeigt eine Leitungselementdurchführung aus einem als Kegelstumpf ausgebildeten Formkörper **1** mit einer flanschartigen, radial nach außen weisenden Umrandung **2** gemäß einer erfindungsgemäßen Ausführungsform, bei der die Grundfläche des Kegelstumpfes die Öffnung **3** und die geschlossene Deckfläche des Kegelstumpfes den Verschluss **4** bildet. Aus dieser Figur ist auch die Sollbruchstelle **5** in Form eines Sternes ersichtlich, die auf dem Verschluss **4** ausgebildet ist.
FIG. 2 zeigt die Kegelstumpfform der Formkörpers **1** mit einer Länge l, wobei die Materialdicke **d₁** der Umrandung **2** nicht mitgerechnet ist, einer Wanddicke des Formkörpers **d₁,** und einer Wanddicke **d₂** des Verschlusses **4.** Angedeutet ist auch die gegenüber der Wanddicke **d₂** des Verschlusses **4** dünnere Sollbruchstelle **5,** die mittig im Verschluss angeordnet ist.

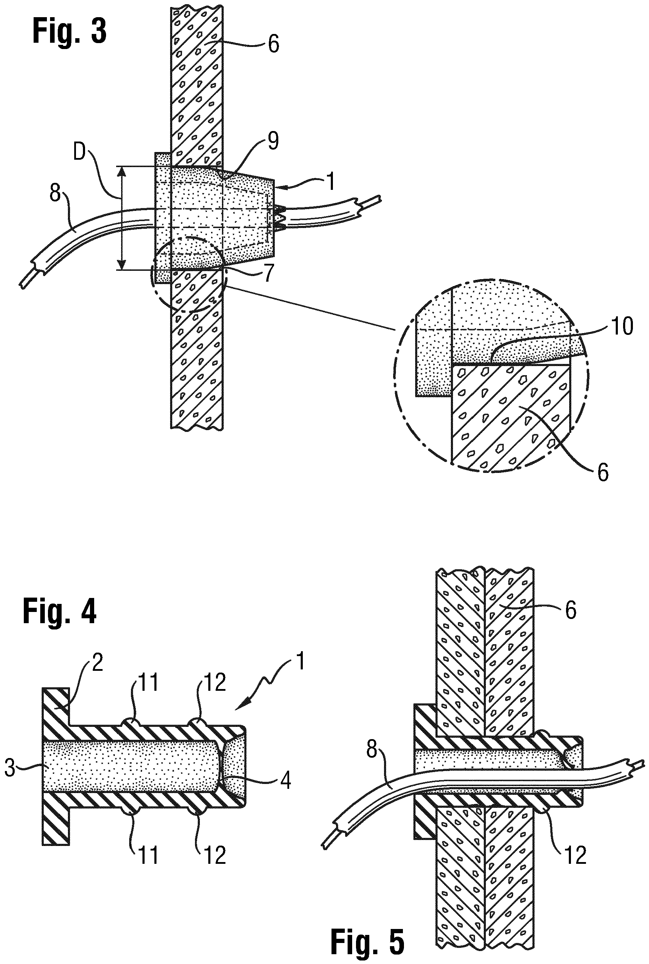

FIG. 3 zeigt die Abschottung einer Öffnung **7** in einem Bauteil **6** mit einer erfindungsgemäßen Leitungselementdurchführung nach FIG. 1, durch welche ein Leitungselement **8** in Form eines Kabels durchgeführt wird. Aus der in FIG. 3 gezeigten Ausführungsform, bei der der Außendurchmesser des Formkörpers **1,** wobei der Umrandung **2** hierbei nicht berücksichtigt wird, geringfügig größer ist als der Durchmesser **D** der Bauteilöffnung **7,** wird ersichtlich, wie durch das Übermaß des Außendurchmessers des Formkörpers zum einen eine größere Kontaktfläche **10** zwischen der Innenwandung **9** der Bauteilöffnung **7,** wodurch eine gute Rauchgasdichtigkeit erzielt wird, und zum anderen eine reibschlüssige Selbstklemmung der Leitungselementdurchführung erreicht wird. Somit kann die Leitungselementdurchführung ohne zusätzliche Hilfsmittel in der Bauteilöffnung **7** hinreichend fest fixiert werden, wobei ein Herausfallen verhindert und ein unbeabsichtigtes Herausziehen erschwert wird. Darüber hinaus ist ersichtlich, wie der Verschluss **4,** das Leitungselement **8** abdichtet.
FIG. 4 zeigt eine Leitungselementdurchführung aus einem als Zylinder ausgebildeten Formkörper **1** mit einer flanschartigen Umrandung **2,** einer Öffnung **3,** einem Verschluss **4** sowie zwei Wülsten **11** und **12** gemäß einer zweiten, alternativen erfindungsgemäßen Ausführungsform.
FIG. 5 zeigt die Abschottung einer Öffnung **7** in einem Bauteil **6,** das aus zwei Gipskartonplatten (doppelt beplankte Trockenbauwand) besteht, mit der Leitungselementdurchführung gemäß der Ausführungsform nach FIG. 4 mit Belegung durch ein Leitungselement **8.** Hieraus wird ersichtlich, dass die zweite Wulst **12** hinter der zweiten Gipskartonplatte einrastet und so eine Sperre gegen unbeabsichtigtes Herausziehen der Leitungselementdurchführung bildet. Durch das nachgiebig verformbare Material aus dem Formkörper **1** besteht, wird die erste Wulst **11** zusammengedrückt, wodurch zusätzlich ein Verklemmen der Leitungselementdurchführung mit der Innenwandung 7 der Bauteilöffnung **6** erreicht wird.

## Patentansprüche

1. Feuer- und rauchgasdichte Leitungselementdurchführung für Bauteildurchbrüche, **gekennzeichnet durch** einen als Hülse ausgebildeten, wenigstens einseitig geschlossenen Formkörper aus einem nachgiebig verformbaren Intumeszenzmaterial, mit der Maßgabe, dass der Öffnungsquerschnitt der Hülse höchstens 60% des Querschnitts des Bauteildurchbruches entspricht.

2. Leitungselementdurchführung nach Anspruch 1, **dadurch gekennzeichnet, dass** der Formkörper einstückig aus dem Intumeszenzmaterial gebildet ist.

3. Leitungselementdurchführung nach Anspruch 1 oder 2, **dadurch gekennzeichnet, dass** der Formkörper an seiner Grundfläche mit einer flanschartigen, radial nach außen weisenden Umrandung versehen ist.

4. Leitungselementdurchführung nach einem der vorhergehenden Ansprüche, **dadurch gekennzeichnet, dass** der Formkörper an seiner Deckfläche geschlossen ist, um einen Verschluss zu bilden.

5. Leitungselementdurchführung nach Anspruch 4, **dadurch gekennzeichnet, dass** das Material des Verschlusses zumindest bereichsweise dünner ist als das des restlichen Formkörpers.

6. Leitungselementdurchführung nach einem der Ansprüche 4 oder 5, **dadurch gekennzeichnet, dass** der Verschluss als Membran ausgebildet ist.

7. Leitungselementdurchführung nach einem der vorhergehenden Ansprüche, **dadurch gekennzeichnet, dass** die Wanddicke des Formkörpers 5 bis 20 mm beträgt.

8. Leitungselementdurchführung nach Anspruch 5 oder 6, **dadurch gekennzeichnet, dass** die zumindest bereichsweise dünnere Wanddicke des Verschlusses 2 bis 8 mm beträgt.

9. Leitungselementdurchführung nach einem der Ansprüche 5 bis 8, **dadurch gekennzeichnet, dass** die dünneren Bereiche des Verschlusses ferner Sollbruchstellen aufweisen.

10. Leitungselementdurchführung nach Anspruch 9, **dadurch gekennzeichnet, dass** die Sollbruchstellen eine Wandstärke von 1 bis 4 mm aufweisen.

11. Leitungselementdurchführung nach einem der vorhergehenden Ansprüche, **dadurch gekennzeichnet, dass** der Formkörper als Kegelstumpf ausgebildet ist.

12. Leitungselementdurchführung nach einem der vorhergehenden Ansprüche, **dadurch gekennzeichnet, dass** der Formkörper als Zylinder ausgebildet ist.

13. Leitungselementdurchführung nach Anspruch 12, **dadurch gekennzeichnet, dass** der Formkörper auf seiner Außenseite mindestens eine radial umlaufende Wulst aufweist, die von der flanschartigen, radial nach außen weisenden Umrandung beabstandet angeordnet sind.

14. Leitungselementdurchführung nach Anspruch 13, **dadurch gekennzeichnet, dass** der Abstand zwischen der Wulst bzw. der zweiten oder jeder weiteren Wulst und der flanschartigen Umrandung 12,5 mm oder 16 mm bzw. ein zwei- oder vielfaches davon beträgt.

15. Leitungselementdurchführung nach Anspruch 13 oder 14, **dadurch gekennzeichnet, dass** die Wulst eine Dicke in axialer Richtung von 4 bis 6 mm aufweist.

16. Leitungselementdurchführung nach einem der Ansprüche 13 bis 15, **dadurch gekennzeichnet, dass** die Wulst eine Dicke in radialer Richtung von 2 bis 4 mm aufweist.

17. Leitungselementdurchführung nach einem der vorhergehenden Ansprüche, **dadurch gekennzeichnet, dass** der Formkörper aus einem intumeszenzfähigen Polyurethanschaum besteht.
